# EUROPÄISCHE PATENTSCHRIFT

(11) **EP 2 843 167 B1**
(45) Veröffentlichungstag und Bekanntmachung des Hinweises auf die Patenterteilung: **29.07.2020**
(21) Anmeldenummer: 14182281.7
(22) Anmeldetag: 26.08.2014
(51) Int. Cl.: E05B 81/08, E05B 81/16, E05B 81/62, H01F 7/18, H02K 37/12, H02K 11/00, E05B 77/26, E05B 77/28

(54) **Verfahren zur Ansteuerung eines Kraftfahrzeugschlosses**
Method for controlling a motor vehicle lock
Procédé de commande d'une serrure de véhicule

(30) Priorität: 27.08.2013 DE 102013014084
(43) Veröffentlichungstag der Anmeldung: 04.03.2015
(73) Patentinhaber: Brose Schliesssysteme GmbH & Co. KG, 42369 Wuppertal (DE)
(72) Erfinder: Pszola, Peter, 53123 Bonn (DE)
(74) Vertreter: Gottschald, Jan

(56) Entgegenhaltungen:
- EP-A1- 2 820 210
- DE-A1- 3 150 814
- DE-A1- 10 315 584
- DE-A1-102010 032 443

## Beschreibung

Die vorliegende Erfindung betrifft ein Verfahren zur Ansteuerung eines Kraftfahrzeugschlosses gemäß Anspruch 1 sowie ein Kraftfahrzeugschloss zur Durchführung eines solchen Verfahrens gemäß Anspruch 11.

Das in Rede stehende Kraftfahrzeugschloss findet Anwendung bei allen Arten von Verschlusselementen eines Kraftfahrzeugs. Dazu gehören insbesondere Seitentüren, Hecktüren, Heckklappen, Heckdeckel oder Motorhauben. Diese Verschlusselemente können grundsätzlich auch nach Art von Schiebetüren ausgestaltet sein.

Heutige Kraftfahrzeugschlösser sind mit einer ganzen Reihe von Funktionen ausgestattet, die mittels elektrischer Antriebe motorisch auslösbar sind. Dabei stellen eine hohe Betriebssicherheit einerseits und eine hohe Kosteneffizienz andererseits besondere Herausforderungen dar.

Das bekannte Verfahren (DE 10 2008 012 563 A1), von dem die Erfindung ausgeht, betrifft die Ansteuerung eines Kraftfahrzeugschlosses. Das Kraftfahrzeugschloss ist mit einem Antrieb zur Verstellung eines Stellelements ausgestattet, der nach Art eines Direktantriebs ausgelegt ist. Der Antrieb weist eine Spulenanordnung auf, durch deren Bestromung vorbestimmte Antriebsstellungen angefahren werden können. Eine irgendwie geartete Überprüfung der tatsächlichen Antriebsstellung ist bei dem bekannten Verfahren nicht vorgesehen, so dass Optimierungspotential im Hinblick auf die Betriebssicherheit besteht.

Der Erfindung liegt das Problem zugrunde, das bekannte Verfahren derart weiterzubilden, dass die Betriebssicherheit bei hoher Kosteneffizienz gesteigert werden kann.

Das obige Problem wird durch ein Verfahren gemäß Anspruch 1 sowie durch ein Verfahren gemäß Anspruch 2 gelöst.

Wesentlich ist die Erkenntnis, dass die durch die Spulenanordnung fließenden Ströme und die an der Spulenanordnung anliegenden Spannungen grundsätzlich Aufschluss über den Betriebszustand des Antriebs geben können. Der Begriff "Betriebszustand" ist dabei weit zu verstehen. Er umfasst beispielsweise Informationen über die tatsächliche Antriebsstellung des Rotors, über eine ungewünschte Manipulation des Rotors im Rahmen eines Diebstahlversuchs o. dgl..

Im Einzelnen sind die vorschlagsgemäßen Verfahren zunächst auf die Ansteuerung eines Kraftfahrzeugschlosses gerichtet, das einen Antrieb zur Verstellung eines Verstellelements aufweist. Der Antrieb weist in an sich üblicher Weise einen Rotor und einen Ständer auf. Ferner ist der Antrieb mit einer Spulenanordnung mit mindestens zwei Spulen ausgestattet, wobei durch unterschiedliche, vorzugsweise stationäre, Ansteuerung der Spulenanordnung mindestens zwei magnetisch stabile Antriebsstellungen des Rotors angefahren werden.

Die Formulierung "magnetisch stabil" bedeutet hier, dass die Ansteuerung der Spulenanordnung mit dem resultierenden Magnetfeld dafür sorgt, dass der Rotor bei einer Auslenkung aus der jeweiligen Antriebsstellung heraus stets zurück in diese Antriebsstellung getrieben wird.

Der Begriff "stationäre Ansteuerung" bedeutet hier, dass sich die eingestellte Ansteuerung im Zeitbereich nicht ändert. Der Begriff "Ansteuerung" ist allgemein zu verstehen und umfasst sowohl das Anlegen einer elektrischen Spannung als auch das Einprägen eines elektrischen Stroms in die Spulenanordnung. Dabei kann die Spannung bzw. der Strom auch gepulst o. dgl. sein. Im einfachsten Fall wird für eine stationäre Ansteuerung im obigen Sinne eine konstante Spannung auf den betreffenden Teil der Spulenanordnung aufgeschaltet.

Gemäß Anspruch 1 werden vorschlagsgemäß in einer Messroutine als Messwerte die an mindestens einer Spule anliegenden Mess-Spulenspannungen ermittelt, wobei aus den Messwerten ein Betriebszustand des Antriebs ermittelt wird. In Abhängigkeit von dem so ermittelten Betriebszustand des Antriebs wird dann in einer Entscheidungsroutine über das Auslösen einer Steuerungsaktion entschieden. Die vorschlagsgemäße Lehre beschränkt sich also nicht auf die schlichte Erfassung und ggf. Anzeige des Betriebszustands des Antriebs, sondern umfasst vor allem eine steuerungstechnische Reaktion basierend auf einer auf den jeweiligen Anwendungsfall zugeschnittenen Entscheidungssystematik.

Alternativ wird gemäß Anspruch 2 vorgeschlagen, dass in einer Messroutine als Messwerte die durch mindestens eine Spule fließenden Mess-Spulenströme ermittelt werden, wobei aus den Messwerten wiederum ein Betriebszustand des Antriebs ermittelt wird und wobei in einer Entscheidungsroutine in Abhängigkeit von dem Betriebszustand über das Auslösen einer Steuerungsaktion entschieden wird.

Je nachdem, ob im Rahmen der normalbetriebsgemäßen Ansteuerung der Spulenanordnung eine Spannung auf die betreffenden Spulen der Spulenanordnung aufgeprägt wird oder ein Strom in die betreffenden Spulen der Spulenanordnung eingeprägt wird, handelt es sich bei den Messwerten entsprechend um Mess-Spulenströme oder Mess-Spulenspannungen.

Die vorschlagsgemäßen Lösungen machen sich den Umstand zu Nutze, dass mit der Rotation des Rotors regelmässig eine Änderung der Induktivität der jeweiligen Spulen und/oder eine Änderung des die magnetischen Spulen durchdringenden magnetischen Feldes verbunden ist bzw. sind. Je nach Ansteuerung gehen hiermit Strom- oder Spannungsänderungen einher. Diese Strom- bzw. Spannungsänderungen werden im Rahmen der vorliegenden Erfindungen genutzt, um auf den Betriebszustand des Antriebs zu schließen und darauf basierend über das Auslösen einer entsprechenden Steuerungsaktion zu entscheiden.

Die bevorzugten Ausgestaltungen gemäß den Ansprüchen 3 bis 7 betreffen drei unterschiedliche bevorzugte Ansätze zur vorschlagsgemäßen Erfassung des Betriebszustands des Antriebs, die auch miteinander kombiniert werden können.

Bei der ersten, besonders bevorzugten Variante gemäß Anspruch 3 wird der Messvorgang während der normalbetriebsgemäßen Ansteuerung der Spulenanordnung vorgenommen. Dabei wird davon ausgegangen, dass bestimmte Betriebszustände von den gemessenen Mess-Spulenspannungen bzw. Mess-Spulenströmen abgeleitet werden können. Beispielsweise wird sich bei einer Ansteuerung der Spulenanordnung durch aufgeprägte Spulenspannungen im Normalfall ein Spulenstrom ausbilden, der bei im Fehlerfall blockiertem Rotor erkennbar andere Werte annehmen würde.

Bei der zweiten, weiter bevorzugten Variante gemäß Anspruch 4 wird die Spulenanordnung mit einer Erreger-Spulenspannung oder einem Erreger-Spulenstrom angesteuert. Die resultierenden, während des Messvorgangs ermittelten Messwerte ergeben dann wiederum Aufschluss über den Betriebszustand des Antriebs. Beispielsweise kann es gemäß Anspruch 5 vorgesehen sein, dass eine periodische Erreger-Spulenspannung auf eine Spule der Spulenanordnung aufgeschaltet wird, wobei aus dem gemessenen Mess-Spulenstrom auf die aktuelle Induktivität der Spule, die ja von der Stellung des Rotors abhängen kann, ermittelbar ist. So lässt sich auf einfache Weise eine Information über die aktuelle Antriebsstellung des Antriebs ermitteln.

Die dritte, weiterhin interessante Variante gemäß Anspruch 7 sieht vor, dass der Messvorgang im Ruhezustand bei nicht angesteuerter Spulenanordnung vorgenommen wird. Grundsätzlich sollte in einem solchen Ruhezustand weder Strom noch Spannung in den Spulen der Spulenanordnung zu messen sein. Anders ist dies, wenn ein Manipulationsversuch vorgenommen wird, beispielsweise durch eine gewaltsame Rotation des Rotors oder durch ein von außen auf das Kraftfahrzeugschloss einwirkendes Magnetfeld, das auf eine mißbräuchliche Verstellung des Rotors gerichtet ist. In beiden Fällen entstehen durch die Veränderung der Induktivität und/oder der Veränderung des die jeweiligen Spulen durchdringenden Magnetfelds entsprechende Änderungen in den Mess-Spulenspannungen bzw. den Mess-Spulenströmen. Mit den vorschlagsgemäßen Verfahren lässt sich also ein Manipulationsversuch im Rahmen eines Diebstahlversuchs leicht erfassen.

Bei einer weiter bevorzugten Variante findet bei den vorschlagsgemäßen Verfahren vorzugsweise ein Antrieb nach Art einer Radialflussmaschine Anwendung, wodurch eine besonders verlustarme Bauform möglich ist. Bei der weiter bevorzugten Ausgestaltung gemäß Anspruch 13 ist der Antrieb nach Art einer Axialflussmaschine aufgebaut, mit der sich besonders hohe Antriebs-Drehmomente bei kompakter Bauform erzielen lassen. Sowohl bei dem als Radialflussmaschine ausgestalteten Antrieb als auch bei dem als Axialflussmaschine ausgestaltetem Antrieb ist der Antrieb vorzugsweise nach Art eines Direktantriebs ausgestaltet. Dies bedeutet, dass auf jegliche Getriebekomponenten zwischen dem Rotor des Antriebs und dem zu verstellenden Stellelement verzichtet worden sind.

Nach einer weiteren Lehre gemäß Anspruch 11, der eigenständige Bedeutung zukommt, wird ein Kraftfahrzeugschloss zur Durchführung eines der vorschlagsgemäßen Verfahren beansprucht. Auf alle Ausführungen zu den vorschlagsgemäßen Verfahren darf verwiesen werden, soweit diese geeignet sind, das Kraftfahrzeugschloss zu beschreiben.

Im Folgenden wird die Erfindung anhand einer lediglich ein Ausführungsbeispiel darstellenden Zeichnung näher erläutert. In der Zeichnung zeigt
- Fig. 1: die für die Erläuterung der vorschlagsgemäßen Verfahren wesentlichen Bestandteile eines vorschlagsgemäßen Kraftfahrzeugschlosses,
- Fig. 2: den Antrieb des Kraftfahrzeugschlosses gemäß Fig.1 in einer ersten Ausführungsform entlang einer Schnittlinie II-II in einer ganz schematischen Darstellung, und
- Fig. 3: den Antrieb des Kraftfahrzeugschlosses gemäß Fig. 1 in einer zweiten Ausführungsform in einer perspektivischen, ganz schematischen Darstellung.

Es darf vorab darauf hingewiesen werden, dass in der Zeichnung nur die Komponenten des den vorschlagsgemäßen Verfahren zu Grunde liegenden Kraftfahrzeugschlosses 1 dargestellt sind, die für die Erläuterung der Lehre notwendig sind. Entsprechend ist eine Schlossfalle, die in üblicher Weise mit einem Schließbolzen o. dgl. zusammenwirkt und die mittels einer Sperrklinke in einer Hauptschließstellung und in einer ggf. vorhandenen Vorschließstellung gehalten wird, in der Zeichnung nicht dargestellt.

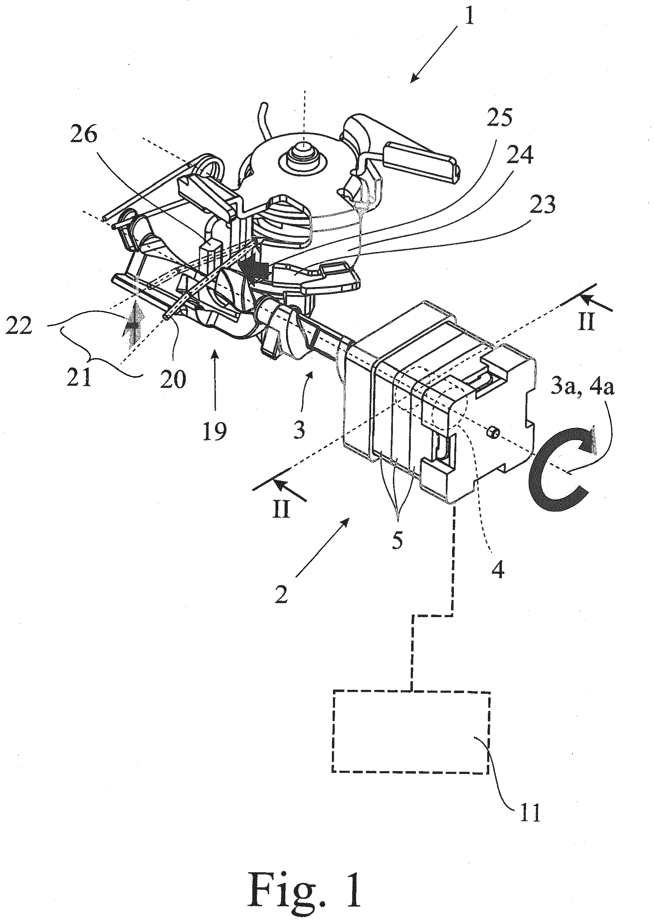

Das in Fig. 1 dargestellte Kraftfahrzeugschloss 1 weist einen Antrieb 2 zur Verstellung eines Stellelements 3 auf. Der Antrieb 2 dient der Einstellung unterschiedlicher Funktionszustände des Kraftfahrzeugschlosses 1, was weiter unten im Detail erläutert wird.

Der Antrieb 2 weist einen Rotor 4 und einen Ständer 5 auf, was dem üblichen Aufbau einer elektrischen Maschine entspricht. Entsprechend ist der Antrieb 2 auch mit einer Spulenanordnung 6 mit mindestens zwei Spulen 7,8,9,10 ausgestattet. Der Antrieb 2 ist hier und vorzugsweise nach Art eines Direktantriebs ausgelegt. Eine irgendwie geartete Übersetzung der Antriebskraft bzw. des Antriebsmoments durch ein zwischengeschaltetes Getriebe o. dgl. ist an dieser Stelle nicht erforderlich.

Der Antrieb 2 ist vorschlagsgemäß nach Art eines Schrittmotors ausgestaltet. Dies bedeutet, dass durch unterschiedliche, vorzugsweise stationäre, Ansteuerung der Spulenanordnung 6 mindestens zwei magnetisch stabile Antriebsstellungen des Rotors 4 angefahren werden. Bei dem dargestellten und insoweit bevorzugten Ausführungsbeispiel ist das Anfahren insgesamt fünf magnetisch stabiler Antriebsstellungen des Rotors 4 vorgesehen. Grundsätzlich können mit dem Antrieb 2 auch mehr als fünf magnetisch stabile Antriebsstellungen angefahren werden.

Mit "Ansteuerung" der Spulenanordnung 6 ist, wie oben angesprochen, gemeint, dass die Spulenanordnung 6 in vorbestimmter Weise mit mindestens einer Antriebsspannung oder mit mindestens einem Antriebsstrom beaufschlagt wird.

Im Sinne der oben angesprochenen Auslegung des Begriffs "stationäre Ansteuerung" wird die Antriebsspannung bzw. der Antriebsstrom lediglich aufgeschaltet, und nicht etwa im Hinblick auf einen bestimmten Bewegungsablauf o. dgl. geregelt. Es wurde auch schon erläutert, dass der Begriff "magnetisch stabile Antriebsstellung" vorliegend bedeutet, dass während der Ansteuerung der Rotor 4 stets in die entsprechende Antriebsstellung drängt. Dies bedeutet, dass ein Anfahren der Antriebsstellungen, die den entsprechenden Steuerstellungen des Stellelements 3 entsprechen, ohne die Notwendigkeit eines Endanschlags o. dgl. erfolgen kann. Das ist verschleiß- und geräuschreduzierend und vereinfacht die mechanische Konstruktion.

Vorschlagsgemäß werden in einer Messroutine als Messwerte die an mindestens einer Spule 7-10 anliegenden Mess-Spulenspannungen ermittelt, wobei aus den Messwerten ein Betriebszustand des Antriebs 2 ermittelt wird und wobei in einer Entscheidungsroutine in Abhängigkeit von dem Betriebszustand über das Auslösen einer Steuerungsaktion entschieden wird. Für die Durchführung der Messroutine ist in der Zeichnung ganz schematisch eine Steuerungseinrichtung 11 dargestellt, die grundsätzlich auch der Ansteuerung der Spulenanordnung 6 dienen kann.

Nach einer zweiten Lehre ist es vorgesehen, dass in einer Messroutine als Messwerte die durch mindestens eine Spule 7-10 fließenden Mess-Spulenströme ermittelt werden, wobei aus den Messwerten ein Betriebszustand des Antriebs 2 ermittelt wird und wobei in einer Entscheidungsroutine in Abhängigkeit von dem Betriebszustand über das Auslösen einer Steuerungsaktion entschieden wird.

Die obige Entscheidungsroutine kann zusammen mit der Messroutine in der Steuerungseinrichtung 11 oder in einer anderen Steuerungseinrichtung ablaufen.

Vorzugsweise wird der Messvorgang während der normalbetriebsgemäßen motorischen Verstellung, also während der oben angesprochenen, vorzugsweise stationären, Ansteuerung der Spulenanordnung 6 für das Anfahren einer magnetisch stabilen Antriebsstellung des Rotors 4 vorgenommen. Betriebszustände wie ein Blockierzustand des Rotors 4 lassen sich so durch noch zu erläuternde Strom- oder Spannungsabweichungen erfassen.

Eine andere bevorzugte Möglichkeit für die Umsetzung eines Messvorgangs besteht darin, dass für den Messvorgang mindestens eine Spule 7-10 der Spulenanordnung 6 mit einer Erreger-Spulenspannung und/oder mit einem Erreger-Erreger-Spulenstrom angesteuert wird. Für den Fall, dass sich mit der Drehung des Rotors 4 die Induktivität der betreffenden Spule 7-10 ändert, kann über den resultierenden Mess-Spulenstrom bzw. die resultierende Mess-Spulenspannung auf die Antriebsstellung geschlossen werden.

Vorzugsweise handelt es sich bei der Erreger-Spulenspannung um eine periodische Erreger-Spulenspannung, insbesondere um eine Wechselspannung. Damit lässt sich auf einfache Weise der komplexe Widerstand der betreffenden Spule 7-10 und daraus die Induktivität der betreffenden Spule 7-10 ermitteln. Grundsätzlich kann es sich bei der Erreger-Spulenspannung auch um eine impulsartige Erreger-Spulenspannung handeln. Über die jeweilige Impulsantwort lässt sich wiederum ein Rückschluss auf die Stellung des Rotors 4 führen.

Alternativ oder zusätzlich kann im Rahmen der Messroutine ein Erreger-Spulenstrom, insbesondere ein Wechselstrom oder ein impulsartiger Strom, in mindestens eine Spule 7-10 der Spulenanordnung 6 eingeprägt werden.

Interessant bei der letztgenannten Variante für den Messvorgang ist, dass der Messvorgang nicht notwendigerweise mit einer Verstellung des Rotors 4 einhergehen muss. Vorzugsweise ist es so, dass die Erreger-Spulenspannung bzw. der Erreger-Spulenstrom so bemessen ist, dass die Ansteuerung der Spulenanordnung 6 mit der Erreger-Spulenspannung bzw. dem Erreger-Spulenstrom keine motorische Verstellung des Rotors 4 verursacht.

In einer weiteren bevorzugten Variante für den Messvorgang, die mit den vorgenannten Varianten kombiniert werden kann, besteht darin, dass der Messvorgang im Ruhezustand bei nicht angesteuerter Spulenanordnung 6 vorgenommen wird. Hiermit lassen sich bestimmte Diebstahlversuche auf einfache Weise erfassen, wie weiter unten erläutert wird.

Es sind verschiedene vorteilhafte Ausführungsformen für die Ermittlung des Betriebszustands des Antriebs 2 aus den Messwerten denkbar.

Nach einer ersten, besonders bevorzugten Ausführungsform ist es vorgesehen, dass in einem Speicher die für das Anfahren magnetisch stabiler Antriebsstellungen charakteristischen Sollwerte oder Sollwertverläufe für die jeweiligen Messwerte abgelegt sind. Eine vorbestimmte Abweichung der gemessenen Messwerte von den Sollwerten oder den Sollwertverläufen wird dann als Fehlstellungszustand erfasst. Dies ist beispielsweise der Fall, wenn der Rotor 4 im Fehlerfall festgesetzt ist. In einem solchen Fall wird als Steuerungsaktion eine Fehlstellungsroutine durchlaufen, die der Anzeige und/oder der Behebung des Fehlstellungszustands dient. Hier und vorzugsweise umfasst die Fehlstellungsroutine ein nochmaliges Anfahren der jeweiligen Antriebsstellung mittels des Antriebs 2. Dieses nochmalige Anfahren kann insbesondere mit erhöhter Antriebsleistung erfolgen, um den ggf. festgesetzten Rotor 4 zu lösen. Andere Varianten für die Fehlstellungsroutine sind denkbar.

Für den Fall, dass der Messvorgang bei nicht angesteuerter Spulenanordnung 6 vorgenommen wird, ist es vorzugsweise vorgesehen, dass das die Erfassung einer Mess-Spulenspannung oder eines Mess-Spulenstroms oberhalb einer vorbestimmten Schwelle als Diebstahlzustand erfasst wird. Dies kann beispielsweise auf eine gewaltsame Drehung des Rotors 4 oder durch das Einwirken eines von außen auf das Kraftfahrzeugschloss 1 einwirkenden Magnetfelds zurückgehen. Mit solchen von Außen auf das Kraftfahrzeugschloss 1 einwirkenden Magnetfeldern ist es grundsätzlich möglich, eine mißbräuchliche Verstellung des Rotors 4 zu verursachen.

Als Steuerungsaktion wird auf die Erfassung des Diebstahlzustands vorzugsweise eine Diebstahlroutine ausgelöst, die beispielsweise der Anzeige des Diebstahlzustands und/oder der Verhinderung des unauthorisierten Öffnens der jeweils zugeordneten Kraftfahrzeugtür dient. Hier und vorzugsweise umfasst die Diebstahlroutine die Überführung des Kraftfahrzeugschlosses 1 in einen Verriegelungszustand mittels des Antriebs 2.

Grundsätzlich kann der Messvorgang ausschließlich zu den Zeitpunkten vorgenommen werden, in denen durch eine Ansteuerung der Spulenanordnung 6 eine entsprechende Antriebsstellung angefahren wird. Vorzugsweise ist es allerdings so, dass der Messvorgang zyklisch vorgenommen wird. Dies betrifft insbesondere den Fall, dass der Messvorgang der Erfassung eines Diebstahlzustands dient.

Für den grundsätzlichen Aufbau des Antriebs 2 sind zahlreiche vorteilhafte Varianten denkbar. Hier und vorzugsweise ist es so, dass die Spulenanordnung 6 am Ständer 5 und eine Permanentmagnetanordnung 12 am Rotor 4 angeordnet sind. Dies kann auch umgekehrt vorgesehen sein. Denkbar ist auch, dass anstelle der Permanentmagnetanordnung 12 eine Erreger-Spulenanordnung vorgesehen ist, die über einen Kommutator angesteuert wird.

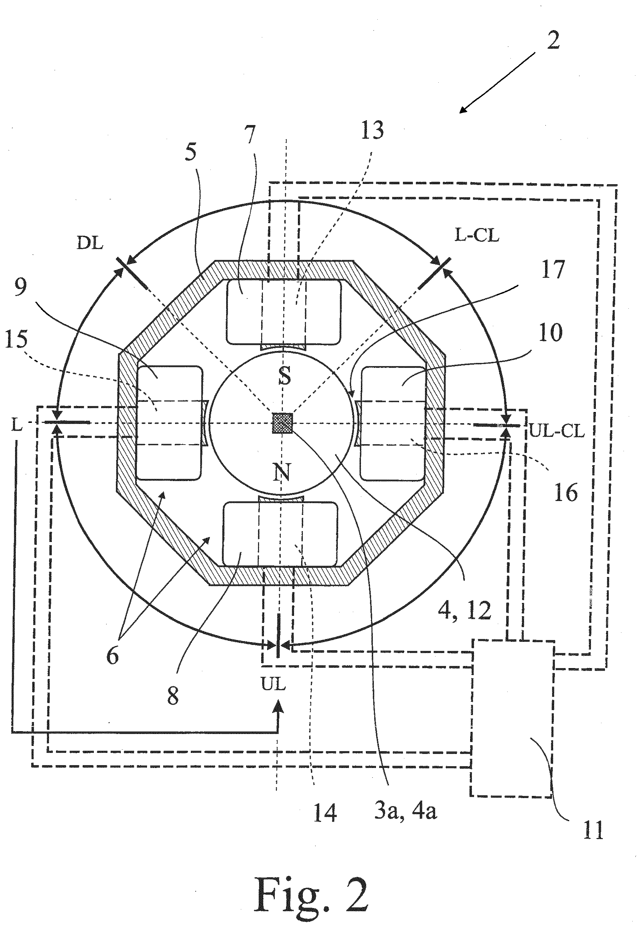

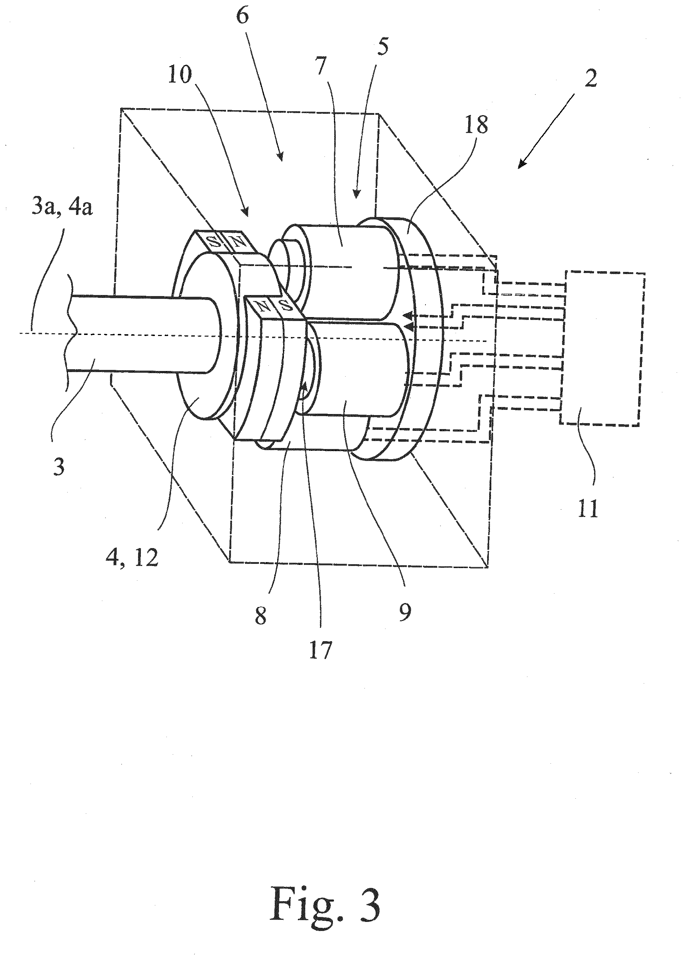

Die in den Fig. 2 und 3 dargestellten Antriebe 2 sind bezogen auf die Rotorachse 4a des Antriebs 2 im Wesentlich symmetrisch ausgestaltet, so dass die Messroutine je nach Ausführung mehrdeutige Ergebnisse, insbesondere im Hinblick auf die zu ermittelnde Antriebsstellung des Rotors 4, liefern kann. Um solche Mehrdeutigkeiten zu vermeiden, kann es vorgesehen sein, dass der Ständer 5 und/oder der Rotor 4 des Antriebs 2 bezogen auf eine Rotorachse 4a des Rotors 4 derart asymmetrisch ausgestaltet ist bzw. sind, dass sich aufgrund der Asymmetrie Messwerte ergeben, die eine eindeutige Ermittlung der jeweiligen Antriebsstellung des Rotors 4 erlauben.

Bei dem in Fig. 2 dargestellten Ausführungsbeispiel ist der Antrieb 2 nach Art einer Radialflussmaschine aufgebaut, wobei hier der Ständer 5 mindestens zwei Pole 13-16 aufweist, über die ein von der Spulenanordnung 6 erzeugtes Magnetfeld geführt wird. Fig. 2 zeigt weiter, dass mindestens ein Pol, hier alle Pole 13-16, des Ständers 5 bis auf einen im Querschnitt im Wesentlichen ringabschnittsförmigen Spalt 17 an den Rotor 4 heranreicht bzw. heranreichen. Hier und vorzugsweise sind die Pole 13-16 des Ständers 5 über eine bezogen auf die Rotorachse 4a um den Rotor 4 umlaufende Leitanordnung 18 magnetisch gekoppelt, was zu einem besonders hohen Wirkungsgrad führt.

Bei dem in Fig. 3 dargestellten Ausführungsbeispiel ist der Antrieb 2 nach Art einer Axialflussmaschine aufgebaut, wobei der Ständer 5 wiederum mindestens zwei Pole 13-16, hier und vorzugsweise vier Pole 13-16, aufweist, über die ein von der Spulenanordnung 6 erzeugtes Magnetfeld geführt wird. Dabei reicht mindestens ein Pol 13-16 des Ständers 5 bis auf einen bezogen auf die Rotorachse 4a axialen Spalt an eine Stirnseite des Rotors 4 heran.

Sowohl bei dem als Radialflussmaschine ausgestalteten Antrieb 2 als auch bei dem als Axialflussmaschine ausgestalteten Antrieb 2 führt eine, insbesondere stationäre, Ansteuerung der Spulenanordnung 6 zum Anfahren magnetisch stabiler Antriebsstellungen des Rotors 4. Dabei ist es vorzugsweise so, dass die Spulen 7-10 der Spulenanordnung 6 paarweise angesteuert werden.

Interessant bei den dargestellten und insoweit bevorzugten Ausführungsbeispielen ist die Tatsache, dass der Antrieb 2 wie oben angesprochen als Direktantrieb ausgelegt ist. Entsprechend ist eine Getriebeübersetzung zwischen dem Rotor 4 und dem Stellelement 3, das hier und vorzugsweise als Steuerwelle ausgestaltet ist, nicht vorgesehen.

Fig. 1 zeigt eine bevorzugte Ausführungsform für das vorschlagsgemäße Kraftfahrzeugschloss 1, das eine Schlossmechanik 19 aufweist. Die Schlossmechanik 19 ist in unterschiedliche Funktionszustände wie "verriegelt", "entriegelt", "diebstahlgesichert", "verriegelt-kindergesichert" und "entriegelt-kindergesichert" bringbar.

Die oben angesprochenen Funktionszustände des Kraftfahrzeugschlosses 1 betreffen die Möglichkeit des Öffnens einer Kraftfahrzeugtür o. dgl. mittels eines Türinnengriffs und mittels eines Türaußengriffs. Im Funktionszustand "verriegelt" kann von innen geöffnet werden, nicht jedoch von außen. Im Funktionszustand "entriegelt" kann sowohl von innen als auch von außen geöffnet werden. Im Funktionszustand "diebstahlgesichert" kann weder von innen noch von außen geöffnet werden. Im Funktionszustand "verriegelt-kindergesichert" kann von innen entriegelt aber weder von innen noch von außen geöffnet werden. Im Funktionszustand "entriegelt-kindergesichert" kann von außen, nicht jedoch von innen geöffnet werden. Diese Funktionszustände werden auch als "lock" bzw. "L", "unlock" bzw. "UL", "double lock" bzw. "DL", "lock-child lock" bzw. "L-CL" und "unlock-child lock" bzw. "UL-CL" bezeichnet.

Zur Einstellung der verschiedenen Funktionszustände ist ein Funktionselement 20 vorgesehen, wobei das als Steuerwelle ausgestaltete Stellelement 3 in antriebstechnischem Eingriff mit dem Funktionselement 20 steht oder bringbar ist. Denkbar ist auch, dass die Steuerwelle 3 selbst ein Bestandteil des Funktionselements 20 ist. Hier und vorzugsweise ist es so, dass sich das Funktionselement 20 an einem Steuerabschnitt 21 der Steuerwelle 3 abstützt. Je nach Stellung der Steuerwelle 3 verstellt sich das Funktionselement 20 im Wesentlichen senkrecht zu der Stellelementachse 3a, wie in Fig. 1 durch den Bewegungspfeil 22 und durch die gestrichelte Darstellung des Funktionselements 20 dargestellt ist.

Die Steuerwelle 3 lässt sich nun mittels des Antriebs 2 in mindestens zwei Steuerstellungen, hier und vorzugsweise in insgesamt fünf Steuerstellungen bringen, um die Funktionszustände des Kraftfahrzeugschlosses, hier die in Fig. 2 angedeuteten Funktionszustände "CL", "UL", "DL", "L-CL" und "UL-CL" einstellen zu können.

Im Folgenden wird die Funktionsweise des Kraftfahrzeugschlosses 1 in den Funktionszuständen "entriegelt" und "entriegelt-kindergesichert" erläutert. Im Übrigen darf zur Erläuterung der grundsätzlichen Funktionsweise des Kraftfahrzeugschlosses mit federelastischem Funktionselement 20 auf die internationale Patentanmeldung WO 2009/040074 A1 verwiesen werden, die auf die Anmelderin zurückgeht Im Funktionszustand "entriegelt" steht das Funktionselement 20 in seiner in Fig. 1 unteren, in durchgezogener Linie dargestellten Stellung. Damit befindet sich das Funktionselement 20 im Bewegungsbereich des Innenbetätigungshebels 23, der mit einem Türinnengriff gekoppelt ist sowie im Bewegungsbereich eines Außenbetätigungshebels 24, der mit einem Türaußengriff gekoppelt ist. Eine Verstellung des Innenbetätigungshebels 23 oder des Außenbetätigungshebels 24 in Richtung des Bewegungspfeils 25 führt dazu, dass das Funktionselement 20 senkrecht zu seiner Erstreckung der Bewegung des jeweiligen Hebels 24,25 folgt, auf die in Fig. 1 nur angedeutete Sperrklinke 26 trifft und diese wiederum in Richtung des Bewegungspfeils 25 mitnimmt und aushebt.

Eine Verstellung der Steuerwelle 3 um 90° im Uhrzeigersinn aus der in Fig. 1 dargestellten Stellung heraus führt zur Einstellung des Funktionszustands "entriegelt-kindergesichert". In diesem Zustand befindet sich das Funktionselement 20 in der in Fig. 1 in gestrichelter Linie dargestellten Stellung. Eine Verstellung des Innenbetätigungshebels 23 in Richtung des Bewegungspfeils 25 hat damit keine Auswirkung auf das Funktionselement 20 und die Sperrklinke 26. Das Funktionselement 20 befindet sich allerdings unverändert im Bewegungsbereich des Außenbetätigungshebels 24, so dass ein Ausheben der Sperrklinke 26 und damit ein Öffnen der Kraftfahrzeugtür über den Außenbetätigungshebel 24 und damit über den Türaußengriff möglich ist.

Analog zu der Einstellung der oben beschriebenen Funktionszustände "entriegelt" und "entriegelt-kindergesichert" lassen sich auch alle anderen oben angesprochenen Funktionszustände allein durch eine entsprechende Verstellung der Steuerwelle 3 umsetzen. Der Antrieb 2 ist dazu ausgelegt, alle Funktionszustände entsprechend anzufahren.

Nach einer weiteren Lehre, der ebenfalls eigenständige Bedeutung zukommt, wird ein Kraftfahrzeugschloss 1 zur Durchführung eines oben angesprochenen, vorschlagsgemäßen Verfahrens beansprucht.

Das vorschlagsgemäße Kraftfahrzeugschloss 1 ist jedenfalls mit einem Antrieb 2 und einem Stellelement 3, das mittels des Antriebs 2 motorisch verstellbar ist, ausgestattet. Der Antrieb 2 weist einen Rotor 4 und einen Ständer 5 auf. Zur Erzeugung eines Magnetfelds weist der Antrieb 2 weiter eine Spulenanordnung 6 mit mindestens zwei Spulen 7-10 auf, wobei durch unterschiedliche, insbesondere stationäre, Ansteuerung der Spulenanordnung 6 mindestens zwei magnetisch stabile Antriebsstellungen des Rotors 4 anfahrbar sind. Dem Kraftfahrzeugschloss 1 ist vorzugsweise eine Steuerungseinrichtung 11 zugeordnet, in der die oben beschriebenen, vorschlagsgemäßen Messroutinen ablaufen können. Auf alle Ausführungen zu dem vorschlagsgemäßen Verfahren zur Ansteuerung eines solchen Kraftfahrzeugschlosses 1 darf verwiesen werden, soweit diese geeignet sind, das Kraftfahrzeugschloss 1 als solches zu beschreiben.

Schließlich darf noch zur Klarstellung darauf hingewiesen werden, dass die Komponenten des Kraftfahrzeugschlosses 1 nicht notwendigerweise in ein und demselben Gehäuse untergebracht sein müssen. Insbesondere kann es vorteilhaft sein, den Antrieb 2 in einem von dem Kraftfahrzeugschloss 1 im Übrigen getrennt ausgestalteten Gehäuse vorzusehen, so dass das Kraftfahrzeugschloss 1 insoweit verteilt angeordnet ist.

## Patentansprüche

1. Verfahren zur Ansteuerung eines Kraftfahrzeugschlosses (1), das einen Antrieb (2) zur Verstellung eines Stellelements (3) aufweist, wobei der Antrieb (2) einen Rotor (4) und einen Ständer (5) aufweist, wobei der Antrieb (2) eine Spulenanordnung (6) mit mindestens zwei Spulen (7-10) aufweist und wobei durch unterschiedliche, insbesondere stationäre, Ansteuerung der Spulenanordnung (6) mindestens zwei magnetisch stabile Antriebsstellungen des Rotors (4) angefahren werden, wobei in einer Messroutine als Messwerte die an mindestens einer Spule (7-10) anliegenden Mess-Spulenspannungen ermittelt werden, wobei aus den Messwerten ein Betriebszustand des Antriebs (2) ermittelt wird und wobei in einer Entscheidungsroutine in Abhängigkeit von dem Betriebszustand über das Auslösen einer Steuerungsaktion entschieden wird.

2. Verfahren zur Ansteuerung eines Kraftfahrzeugschlosses (1), das einen Antrieb (2) zur Verstellung eines Stellelements (3) aufweist, wobei der Antrieb (2) einen Rotor (4) und einen Ständer (5) aufweist, wobei der Antrieb eine Spulenanordnung (6) mit mindestens zwei Spulen (7-10) aufweist und wobei durch unterschiedliche, insbesondere stationäre, Ansteuerung der Spulenanordnung (6) mindestens zwei magnetisch stabile Antriebsstellungen des Rotors (4) angefahren werden, wobei in einer Messroutine als Messwerte die durch mindestens eine Spule (7-10) fließenden Mess-Spulenströme ermittelt werden, wobei aus den Messwerten ein Betriebszustand des Antriebs (2) ermittelt wird und wobei in einer Entscheidungsroutine in Abhängigkeit von dem Betriebszustand über das Auslösen einer Steuerungsaktion entschieden wird.

3. Verfahren nach einem der vorhergehenden Ansprüche, **dadurch gekennzeichnet, dass** der Messvorgang während der, insbesondere stationären, Ansteuerung der Spulenanordnung (6) für das Anfahren einer magnetisch stabilen Antriebsstellung des Rotors (4) vorgenommen wird.

4. Verfahren nach einem der vorhergehenden Ansprüche, **dadurch gekennzeichnet, dass** für den Messvorgang mindestens eine Spule (7-10) der Spulenanordnung (6) mit einer Erreger-Spulenspannung und/oder mit einem Erreger-Erreger-Spulenstrom angesteuert wird.

5. Verfahren nach Anspruch 4, **dadurch gekennzeichnet, dass** die Erreger-Spulenspannung eine periodische Erreger-Spulenspannung, insbesondere eine Wechselspannung, oder eine impulsartige Spannung ist und/oder der Erreger-Spulenstrom ein periodischer Erreger-Spulenstrom, insbesondere ein Wechselstrom, oder ein impulsartiger Strom ist.

6. Verfahren nach Anspruch 4 oder 5, **dadurch gekennzeichnet, dass** die Erreger-Spulenspannung und/oder der Erreger-Spulenstrom so bemessen ist bzw. sind, dass die Ansteuerung der Spulenanordnung (6) mit der Erreger-Spulenspannung und/oder dem Erreger-Spulenstrom keine motorische Verstellung des Rotors (4) verursacht.

7. Verfahren nach einem der vorhergehenden Ansprüche, **dadurch gekennzeichnet, dass** der Messvorgang im Ruhezustand bei nicht angesteuerter Spulenanordnung (6) vorgenommen wird.

8. Verfahren nach einem der vorhergehenden Ansprüche, **dadurch gekennzeichnet, dass** in einem Speicher die für das Anfahren magnetisch stabiler Antriebsstellungen charakteristischen Sollwerte oder Sollwertverläufe für die Meßwerte abgelegt ist und dass eine vorbestimmte Abweichung der Meßwerte von den Sollwerten oder Sollwertverläufen als Fehlstellungszustand erfasst wird und dass dann als Steuerungsaktion eine Fehlstellungsroutine durchlaufen wird, vorzugsweise, dass die Fehlstellungsroutine ein nochmaliges Anfahren der jeweiligen Antriebsstellung mittels des Antriebs (2) umfasst.

9. Verfahren nach einem der vorhergehenden Ansprüche, **dadurch gekennzeichnet, dass** aus dem nicht angesteuerten Zustand der Spulenanordnung (6) heraus die Erfassung einer Mess-Spulenspannung oder eines Mess-Spulenstroms oberhalb einer vorbestimmten Schwelle als Diebstahlzustand erfasst wird und dass dann als Steuerungsaktion eine Diebstahlroutine ausgelöst wird, vorzugsweise, dass die Diebstahlroutine die Überführung des Kraftfahrzeugschlosses (1) in einen Verriegelungszustand mittels des Antriebs (2) umfasst.

10. Verfahren nach einem der vorhergehenden Ansprüche, **dadurch gekennzeichnet, dass** der Messvorgang zyklisch vorgenommen wird.

11. Kraftfahrzeugschloss, das einen Antrieb (2) zur Verstellung eines Stellelements (3) aufweist, wobei der Antrieb (2) einen Rotor (4) und einen Ständer (5) aufweist, wobei der Antrieb (2) eine Spulenanordnung (6) mit mindestens zwei Spulen (7-10) aufweist und wobei durch unterschiedliche, insbesondere stationäre, Ansteuerung der Spulenanordnung (6) mindestens zwei magnetisch stabile Antriebsstellungen des Rotors (4) anfahrbar sind, wobei das Kraftfahrzeugschloss eine Steuerungseinrichtung (11), eingerichtet zur Durchführung einer Messroutine eines der Verfahren nach einem der vorhergehenden Ansprüche, aufweist.

12. Kraftfahrzeugschloss nach Anspruch 11, **dadurch gekennzeichnet, dass** die Spulenanordnung (6) am Ständer (5) und eine Permanentmagnetanordnung (12) am Rotor (4) angeordnet sind.

13. Kraftfahrzeugschloss nach Anspruch 11 oder 12, **dadurch gekennzeichnet, dass** der Ständer (5) mindestens zwei Pole (13-16) aufweist, über die ein von der Spulenanordnung (6) erzeugtes Magnetfeld geführt wird, dass mindestens ein Pol (13-16) des Ständers (5) bis auf einen im Querschnitt im Wesentlichen ringabschnittsformigen Spalt (17) an den Rotor (4) heranreicht und dass die Pole (13-16) des Ständers (5) über eine bezogen auf die Rotorachse (4a) um den Rotor (4) umlaufende Leitanordnung (18) magnetisch gekoppelt sind.

14. Kraftfahrzeugschloss nach einem der Ansprüche 11 bis 13, **dadurch gekennzeichnet, dass** der Ständer (5) mindestens zwei Pole (13-16) aufweist, über die ein von der Spulenanordnung (6) erzeugtes Magnetfeld geführt wird und dass mindestens ein Pol (13-16) des Ständers (5) bis auf einen bezogen auf die Rotorachse (4a) axialen Spalt (17) an eine Stirnseite des Rotors (4) heranreicht.

15. Kraftfahrzeugschloss nach einem der Ansprüche 11 bis 14, **dadurch gekennzeichnet, dass** das Kraftfahrzeugschloss eine Schlossmechanik (19) aufweist, die in unterschiedliche Funktionszustände wie "verriegelt", "entriegelt", "diebstahlgesichert", "verriegelt-kindergesichert" und "entriegelt-kindergesichert" bringbar ist, wobei zur Einstellung der verschiedenen Funktionszustände mindestens ein verstellbares Funktionselement (20) vorgesehen ist, wobei das Stellelement (3), insbesondere die Steuerwelle (3), in antriebstechnischem Eingriff mit dem Funktionselement (20) steht oder bringbar ist oder Bestandteil des Funktionselements (20) ist, vorzugsweise, dass sich das Funktionselement (20) an einem Steuerabschnitt (21) der Steuerwelle (3) abstützt.

## Claims

1. Method for activating a motor vehicle lock (1), which has a drive (2) for adjusting an actuating element (3), wherein the drive (2) has a rotor (4) and a stator (5), wherein the drive (2) has a coil arrangement (6) with at least two coils (7-10) and wherein, by different, in particular stationary, activation of the coil arrangement (6), at least two magnetically stable drive positions of the rotor (4) are adopted, wherein, in a measuring routine, the measuring coil voltages present at at least one coil (7-10) are determined as measured values, wherein an operating state of the drive (2) is determined from the measured values and wherein, in a decision-making routine, a decision on the triggering of a control action is made in dependence on the operating state.

2. Method for activating a motor vehicle lock (1), which has a drive (2) for adjusting an actuating element (3), wherein the drive (2) has a rotor (4) and a stator (5), wherein the drive has a coil arrangement (6) with at least two coils (7-10) and wherein, by different, in particular stationary, activation of the coil arrangement (6), at least two magnetically stable drive positions of the rotor (4) are adopted, wherein, in a measuring routine, the measuring coil currents flowing through at least one coil (7-10) are determined as measured values, wherein an operating state of the drive (2) is determined from the measured values and wherein, in a decision-making routine, a decision on the triggering of a control action is made in dependence on the operating state.

3. Method according to one of the preceding claims, **characterized in that** the measuring operation is performed during the, in particular stationary, activation of the coil arrangement (6) for the adoption of a magnetically stable drive position of the rotor (4) .

4. Method according to one of the preceding claims, **characterized in that**, for the measuring operation, at least one coil (7-10) of the coil arrangement (6) is activated with an exciter coil voltage and/or with an exciter-exciter coil current.

5. Method according to Claim 4, **characterized in that** the exciter coil voltage is a periodic exciter coil voltage, in particular an alternating voltage, or a pulse-like voltage and/or the exciter coil current is a periodic exciter coil current, in particular an alternating current, or a pulse-like current.

6. Method according to Claim 4 or 5, **characterized in that** the exciter coil voltage and/or the exciter coil current is or are set to such a level that the activation of the coil arrangement (6) with the exciter coil voltage and/or the exciter coil current does not cause any motorized adjustment of the rotor (4).

7. Method according to one of the preceding claims, **characterized in that** the measuring operation is performed in the inactive state, with the coil arrangement (6) not activated.

8. Method according to one of the preceding claims, **characterized in that** the setpoint values or setpoint value profiles for the measured values that are characteristic of the adoption of magnetically stable activation positions are stored in a memory and **in that** a predetermined deviation of the measured values from the setpoint values or setpoint value profiles is detected as a state of misalignment and **in that** then a misalignment routine is implemented as a control action, preferably **in that** the misalignment routine comprises the respective drive position being adopted once again by means of the drive (2).

9. Method according to one of the preceding claims, **characterized in that**, from the non-activated state of the coil arrangement (6), the detection of a measuring coil voltage or a measuring coil current above a predetermined threshold is detected as a state of theft and **in that** then a theft routine is initiated as a control action, preferably **in that** the theft routine comprises the motor vehicle lock (1) being transferred into a locking state by means of the drive (2).

10. Method according to one of the preceding claims, **characterized in that** the measuring operation is performed cyclically.

11. Motor vehicle lock, which has a drive (2) for adjusting an actuating element (3), wherein the drive (2) has a rotor (4) and a stator (5), wherein the drive (2) has a coil arrangement (6) with at least two coils (7-10) and wherein, by different, in particular stationary, activation of the coil arrangement (6), at least two magnetically stable drive positions of the rotor (4) can be adopted, wherein the motor vehicle lock has a control device (11), designed for carrying out a measuring routine of one of the methods according to one of the preceding claims.

12. Motor vehicle lock according to Claim 11, **characterized in that** the coil arrangement (6) is arranged on the stator (5) and a permanent magnet arrangement (12) is arranged on the rotor (4).

13. Motor vehicle lock according to Claim 11 or 12, **characterized in that** the stator (5) has at least two poles (13-16), via which a magnetic field generated by the coil arrangement (6) is passed, **in that** at least one pole (13-16) of the stator (5) reaches up to the rotor (4) apart from a gap (17) which in cross section is substantially in the form of a segment of a ring and **in that** the poles (13-16) of the stator (5) are magnetically coupled via a conducting arrangement (18) running around the rotor (4) with respect to the rotor axis (4a).

14. Motor vehicle lock according to one of Claims 11 to 13, **characterized in that** the stator (5) has at least two poles (13-16), via which a magnetic field generated by the coil arrangement (6) is passed, and **in that** at least one pole (13-16) of the stator (5) reaches up to an end face of the rotor (4) apart from an axial gap (17) with respect to the rotor axis (4a).

15. Motor vehicle lock according to one of Claims 11 to 14, **characterized in that** the motor vehicle lock has a lock mechanism (19), which can be brought into various functional states, such as "locked", "unlocked", "theft-proof", "locked/child-proof" and "unlocked/child-proof", wherein at least one adjustable functional element (20) is provided for setting the various functional states, wherein the actuating element (3), in particular the control shaft (3), is in, or can be brought into, driving engagement with the functional element (20) or is a component part of the functional element (20), preferably **in that** the functional element (20) is supported on a control portion (21) of the control shaft (3).

## Revendications

1. Procédé de commande d'une serrure de véhicule automobile (1), qui comprend un entraînement (2) pour le déplacement d'un élément de commande (3), dans lequel l'entraînement (2) comprend un rotor (4) et un stator (5), dans lequel l'entraînement (2) comprend un ensemble de bobines (6) doté d'au moins deux bobines (7-10) et dans lequel, par une commande différente, en particulier stationnaire, de l'ensemble de bobines (6), au moins deux positions d'entraînement magnétiquement stables du rotor (4) sont atteintes, dans lequel, dans une routine de mesure, les tensions de bobine de mesure appliquées à au moins une bobine (7-10) sont déterminées comme valeurs de mesure, dans lequel un état de fonctionnement de l'entraînement (2) est déterminé à partir des valeurs de mesure et dans lequel, dans une routine de décision, une décision est prise quant au déclenchement d'une action de commande en fonction de l'état de fonctionnement.

2. Procédé de commande d'une serrure de véhicule automobile (1), qui comprend un entraînement (2) pour le déplacement d'un élément de commande (3), dans lequel l'entraînement (2) comprend un rotor (4) et un stator (5), dans lequel l'entraînement comprend un ensemble de bobines (6) doté d'au moins deux bobines (7-10) et dans lequel, par une commande différente, en particulier stationnaire, de l'ensemble de bobines (6), au moins deux positions d'entraînement magnétiquement stables du rotor (4) sont atteintes, dans lequel, dans une routine de mesure, les courants de bobine de mesure circulant à travers au moins une bobine (7-10) sont déterminés comme valeurs de mesure, dans lequel un état de fonctionnement de l'entraînement (2) est déterminé à partir des valeurs de mesure et dans lequel, dans une routine de décision, une décision est prise quant au déclenchement d'une action de commande en fonction de l'état de fonctionnement.

3. Procédé selon l'une des revendications précédentes, **caractérisé en ce que** l'opération de mesure est effectuée pendant la commande en particulier stationnaire de l'ensemble de bobines (6) pour atteindre une position d'entraînement magnétiquement stable du rotor (4).

4. Procédé selon l'une des revendications précédentes, **caractérisé en ce que**, pour l'opération de mesure, au moins une bobine (7-10) de l'ensemble de bobines (6) est commandée par une tension de bobine d'excitation et/ou par un courant de bobine d'excitation-excitation.

5. Procédé selon la revendication 4, **caractérisé en ce que** la tension de bobine d'excitation est une tension de bobine d'excitation périodique, en particulier une tension alternative, ou une tension impulsionnelle et/ou le courant de bobine d'excitation est un courant de bobine d'excitation périodique, en particulier un courant alternatif, ou un courant impulsionnel.

6. Procédé selon la revendication 4 ou 5, **caractérisé en ce que** la tension de bobine d'excitation et/ou le courant de bobine d'excitation est ou sont évalué(e)(s) de telle sorte que la commande de l'ensemble de bobines (6) par la tension de bobine d'excitation et/ou par le courant de bobine d'excitation ne provoque aucun déplacement motorisé du rotor (4).

7. Procédé selon l'une des revendications précédentes, **caractérisé en ce que** l'opération de mesure est effectuée dans l'état de repos lorsque l'ensemble de bobines (6) n'est pas commandé.

8. Procédé selon l'une des revendications précédentes, **caractérisé en ce que** les valeurs de consigne ou allures de valeurs de consigne pour les valeurs de mesure caractéristiques pour atteindre des positions d'entraînement magnétiquement stables sont sauvegardées dans une mémoire et **en ce qu'**un écart prédéfini des valeurs de mesure par rapport aux valeurs de consigne ou aux allures de valeurs de consigne est détecté comme état de position défectueuse et **en ce qu'**alors une routine de position défectueuse est exécutée en tant qu'action de commande, de préférence **en ce que** la routine de position défectueuse comporte un passage à nouveau à la position d'entraînement respective au moyen de l'entraînement (2).

9. Procédé selon l'une des revendications précédentes, **caractérisé en ce qu'**à partir de l'état non commandé de l'ensemble de bobines (6), la détection d'une tension de bobine de mesure ou d'un courant de bobine de mesure au-dessus d'un seuil prédéfini est détectée comme état de vol et **en ce qu'**alors une routine de vol est déclenchée comme action de commande, de préférence **en ce que** la routine de vol comporte le passage de la serrure de véhicule automobile (1) à un état de verrouillage au moyen de l'entraînement (2).

10. Procédé selon l'une des revendications précédentes, **caractérisé en ce que** l'opération de mesure est effectuée cycliquement.

11. Serrure de véhicule automobile, qui comprend un entraînement (2) pour le déplacement d'un élément de commande (3), dans laquelle l'entraînement (2) comprend un rotor (4) et un stator (5), dans laquelle l'entraînement (2) comprend un ensemble de bobines (6) doté d'au moins deux bobines (7-10) et dans laquelle, par une commande différente, en particulier stationnaire, de l'ensemble de bobines (6), au moins deux positions d'entraînement magnétiquement stables du rotor (4) peuvent être atteintes, la serrure de véhicule automobile comprenant un dispositif de commande (11), conçu pour l'exécution d'une routine de mesure de l'un des procédés selon l'une des revendications précédentes.

12. Serrure de véhicule automobile selon la revendication 11, **caractérisée en ce que** l'ensemble de bobines (6) est disposé sur le stator (5) et un ensemble d'aimants permanents (12) est disposé sur le rotor (4).

13. Serrure de véhicule automobile selon la revendication 11 ou 12, **caractérisée en ce que** le stator (5) comprend au moins deux pôles (13-16), par le biais desquels un champ magnétique généré par l'ensemble de bobines (6) est guidé, **en ce qu'**au moins un pôle (13-16) du stator (5) atteint le rotor (4) à l'exception d'un interstice (17) sensiblement en forme de partie annulaire en section transversale et **en ce que** les pôles (13-16) du stator (5) sont couplés magnétiquement par le biais d'un ensemble conducteur (18) s'étendant de manière périphérique autour du rotor (4) par rapport à l'axe de rotor (4a).

14. Serrure de véhicule automobile selon l'une des revendications 11 à 13, **caractérisée en ce que** le stator (5) comprend au moins deux pôles (13-16), par le biais desquels un champ magnétique généré par l'ensemble de bobines (6) est guidé, et **en ce qu'**au moins un pôle (13-16) du stator (5) atteint un côté frontal du rotor (4) à l'exception d'un interstice axial (17) par rapport à l'axe de rotor (4a).

15. Serrure de véhicule automobile selon l'une des revendications 11 à 14, **caractérisée en ce que** la serrure de véhicule automobile comprend un mécanisme de serrure (19) qui peut être amené dans différents états fonctionnels tels que « verrouillé »,« déverrouillé », « protégé contre le vol », « sécurité enfants verrouillée » et « sécurité enfants déverrouillée », au moins un élément fonctionnel (20) déplaçable étant prévu pour le réglage des différents états fonctionnels, l'élément de commande (3), en particulier l'arbre de commande (3) se trouvant ou pouvant être amené en prise technique d'entraînement avec l'élément fonctionnel (20) ou étant un élément constitutif de l'élément fonctionnel (20), de préférence **en ce que** l'élément fonctionnel (20) s'appuie sur une partie de commande (21) de l'arbre de commande (3).
